# FASCICULE DE BREVET EUROPEEN

(11) **EP 2 620 609 B1**
(45) Date de publication et mention de la délivrance du brevet: **08.04.2015**
(21) Numéro de dépôt: 13150417.7
(22) Date de dépôt: 07.01.2013
(51) Int. Cl.: F01N 3/023

(54) **PROCEDE DE GESTION D'UN FILTRE A PARTICULES**
Kontrollverfahren eines Partikelfilters
Method for managing a particle filter

(30) Priorité: 30.01.2012 FR 1250854
(43) Date de publication de la demande: 31.07.2013
(73) Titulaire: PEUGEOT CITROËN AUTOMOBILES SA, 78140 Velizy-Villacoublay (FR)
(72) Inventeur: Faure, Sebastien, 92500 Rueil Malmaison (FR); Reuilly, Guillaume, 92400 Courbevoie (FR)

(56) Documents cités:
- WO-A1-02/053891

## Description

L'invention concerne un procédé de gestion d'un filtre à particules émises par un moteur à combustion interne d'un véhicule automobile, ainsi qu'un véhicule automobile comprenant un filtre à particules.

Il est connu un procédé de gestion d'un filtre à particules dont la régénération est déclenchée par le franchissement d'une valeur seuil de charge en particules, la valeur seuil déclenchant la régénération variant selon la valeur d'un paramètre de facilité caractérisant la facilité de réaliser la régénération compte tenu de variables d'état du véhicule (vitesse du véhicule, régime du moteur, température de la ligne d'échappement...). Ainsi, le déclenchement est réalisé, selon la valeur de ce paramètre, soit par le franchissement d'un premier seuil par une valeur qui est déterminée par un estimateur de charge à boucle ouverte à partir d'une estimation de production de particules par le moteur, soit par le franchissement d'un second seuil par une valeur qui est déterminée par un estimateur de charge à boucle fermée à partir de la mesure d'une grandeur physique dépendante de la charge du filtre (par exemple, la différence de pression existant aux extrémités amont et aval du filtre). Si le paramètre dé facilité correspond à un roulage favorable aux régénérations, le déclenchement se fait par le franchissement du premier seuil déterminé par l'estimateur de charge à boucle ouverte ; et si ce même paramètre correspond à un roulage défavorable, le déclenchement se fait par le franchissement de second seuil, supérieur au premier seuil, déterminé par l'estimateur de charge à boucle fermée.

D'après la demande de brevet WO 02 053891, il est connu un procédé de commande d'un système de post-traitement des gaz d'échappement d'un moteur à combustion interne, qui utilise un paramètre de fonctionnement du moteur pour estimer l'état de charge du système de post-traitement.

Le problème est que, ne connaissant pas la valeur exacte de la production des particules par le moteur utilisée par l'estimateur de charge à boucle ouverte, et pour tenir compte de la dispersion existant entre les différents véhicules, une marge importante est prise dans l'estimation de la production de particules afin de couvrir un maximum de véhicules et éviter les surémissions (en général, la marge est telle que 90% des émissions sont couvertes, voire plus tel que 99%).

Cependant, d'une part, il peut toujours y avoir une surémission qui, ne pouvant pas être détectée, peut créer à la longue la détérioration prématurée du filtre à particules, et, d'autre part, pour les moteurs dont la production de particules est dans la norme, des régénérations plus fréquentes entraînant une sous-utilisation de la robustesse du filtre et une augmentation de la dilution de carburant dans l'huile.

L'invention vise à résoudre un ou plusieurs de ces inconvénients.

Selon un premier aspect, l'invention porte ainsi sur procédé de gestion d'un filtre à particules émises par un moteur à combustion, une régénération du filtre étant déclenchée, selon la valeur d'un paramètre de facilité caractérisant la facilité de réaliser la régénération compte tenu de variables d'état du véhicule, soit par le franchissement d'un premier seuil de charge par une valeur qui est déterminée par un estimateur de charge à boucle ouverte à partir d'une estimation de production de particules par le moteur, soit par le franchissement d'un second seuil de charge par une valeur qui est déterminée par un estimateur de charge à boucle fermée à partir de la mesure d'une grandeur physique dépendante de la charge du filtre, **caractérisé en ce que** l'estimation de production de particules est corrigée par un facteur de correction qui est déterminé en fonction d'un écart discriminant entre la proportion des régénérations déclenchées par l'estimateur de charge à boucle fermée et une proportion théorique des régénérations qui aurait dû être déclenchées par l'estimateur de charge à boucle fermée compte tenu de la valeur moyenne du paramètre de facilité.

Ainsi, connaissant la proportion des régénérations qui ont été déclenchées par l'estimateur de charge à boucle fermée ainsi que la proportion des régénérations qui auraient dues être déclenchées par ce même estimateur compte tenu de la valeur du paramètre de facilité, il est possible de déterminer si la production de particules par le moteur est dans la norme, supérieure à cette norme ou inférieure. Il est donc possible de corriger la valeur de l'estimation de la production et donc de faire en sorte que l'écart discriminant tende vers zéro. In fine, il est également possible de prendre une marge nettement moins importante dans l'estimation de la production de particules (idéalement, 50 %), toute déviation étant corrigée par la présente invention.

Selon un premier mode de réalisation particulier du premier aspect de l'invention, une zone morte est associée à la relation donnant la proportion théorique de régénération qui aurait dû être déclenchée par l'estimateur à boucle fermée en fonction de la valeur moyenne du paramètre de facilité. De ce fait, l'écart discriminant doit être suffisamment significatif pour entraîner une correction de l'estimation de la production de particules.

Selon un second mode de réalisation particulier du premier aspect de l'invention, la valeur pouvant être prise par le facteur de correction est bornée par une valeur maximale et une valeur minimale. De ce fait, si l'écart discriminant est trop important, la correction de l'estimation de la production de particules reste limitée.

Selon un troisième mode de réalisation particulier du premier aspect de l'invention, l'atteinte de l'une des deux bornes par le facteur de correction entraîne une action corrective supplémentaire. L'action corrective peut être une action sur la commande d'au moins un actionneur lié au fonctionnement du moteur et/ou l'envoi d'un signal d'alerte au conducteur.

Selon un quatrième mode de réalisation particulier du premier aspect de l'invention, le facteur de correction est le cumul d'une partie actuelle qui est déterminée par l'écart discriminant déterminée suite au déclenchement de la dernière régénération, et d'une partie historique mémorisée qui correspond à la valeur du facteur de correction déterminé suite au déclenchement de l'avant dernière régénération. Ainsi, suite à une correction précédente de l'estimation de la production de particules, le retour à un écart discriminant non significatif fait que la valeur de la partie actuelle devient sans effet sur la correction, le facteur de correction devenant alors égal à la partie historique qui a permis ce retour.

Selon un cinquième mode de réalisation particulier du premier aspect de l'invention, la relation donnant la proportion théorique de régénération qui aurait dû être déclenchée par l'estimateur à boucle fermée en fonction de la valeur moyenne du paramètre de facilité est déterminée à partir d'une analyse statistique de couples comprenant la valeur de la proportion des régénérations déclenchées par l'estimateur à boucle fermée et la valeur moyenne associée du paramètre de facilité dans un échantillon représentatif.

Selon un sixième mode de réalisation particulier du premier aspect de l'invention, la valeur corrigée de l'estimation de la production de particules utilisée par l'estimateur de charge à boucle ouverte est égale au produit du facteur de correction et de la valeur de la production de particules estimée par un estimateur de production de particules.

Selon un septième mode de réalisation particulier du premier aspect de l'invention, le facteur de correction est obtenu par l'application d'un régulateur proportionnel intégral à l'écart discriminant.

Selon un second aspect, l'invention porte sur un véhicule automobile comprenant un moteur à combustion, un filtre à particules et un système de contrôle moteur configuré pour déclencher une régénération du filtre, selon la valeur d'un paramètre de facilité caractérisant la facilité de réaliser la régénération compte tenu de variables d'état du véhicule, soit par le franchissement d'un premier seuil de charge par une valeur qui est déterminée par un estimateur de charge à boucle ouverte à partir d'une estimation de production de particules par le moteur, soit par le franchissement d'un second seuil de charge par une valeur qui est déterminée par un estimateur de charge à boucle fermée à partir de la mesure d'une grandeur physique dépendante de la charge du filtre, **caractérisé en ce que** le système de contrôle moteur est configuré pour corriger l'estimation de production de particules par un facteur de correction qui est déterminé en fonction d'un écart discriminant entre la proportion des régénérations déclenchées par l'estimateur de charge à boucle fermée et une proportion théorique des régénérations qui aurait dû être déclenchées par l'estimateur de charge à boucle fermée compte tenu de la valeur moyenne du paramètre de facilité.

D'autres caractéristiques et avantages de l'invention ressortiront clairement de la description qui en est faite ci-après, à titre indicatif et nullement limitatif, en référence aux dessins annexés, dans lesquels :

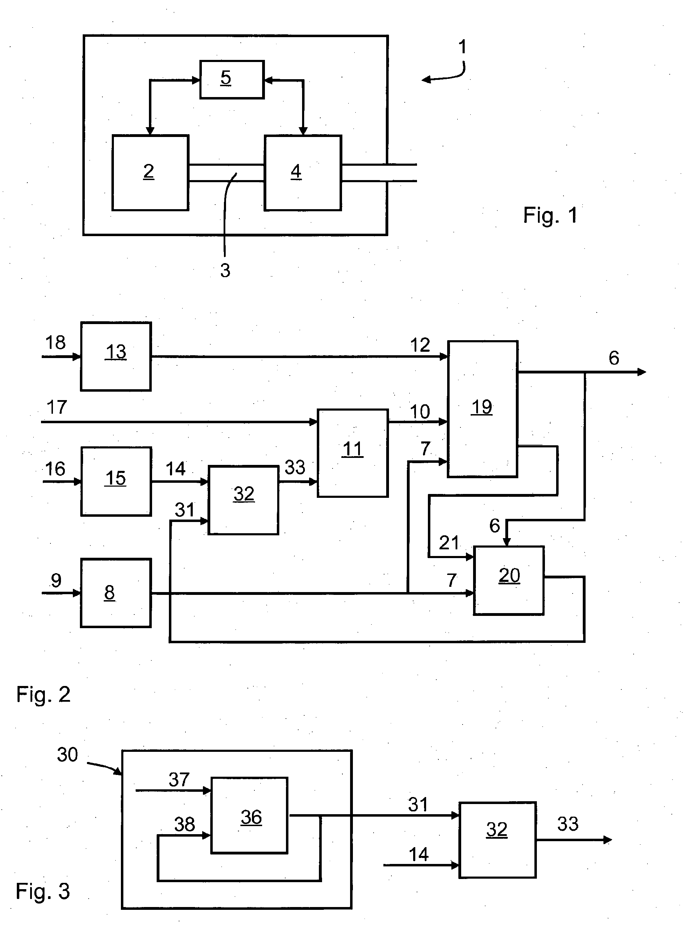

- la figure 1 est une représentation schématique d'un véhicule utilisant un procédé de gestion d'un filtre à particules conforme à la présente invention ;
- la figure 2 est une représentation schématique du procédé de gestion d'un filtre à particules conforme à la présente invention ;
- la figure 3 est une représentation schématique de la correction de l'estimation de particules ;

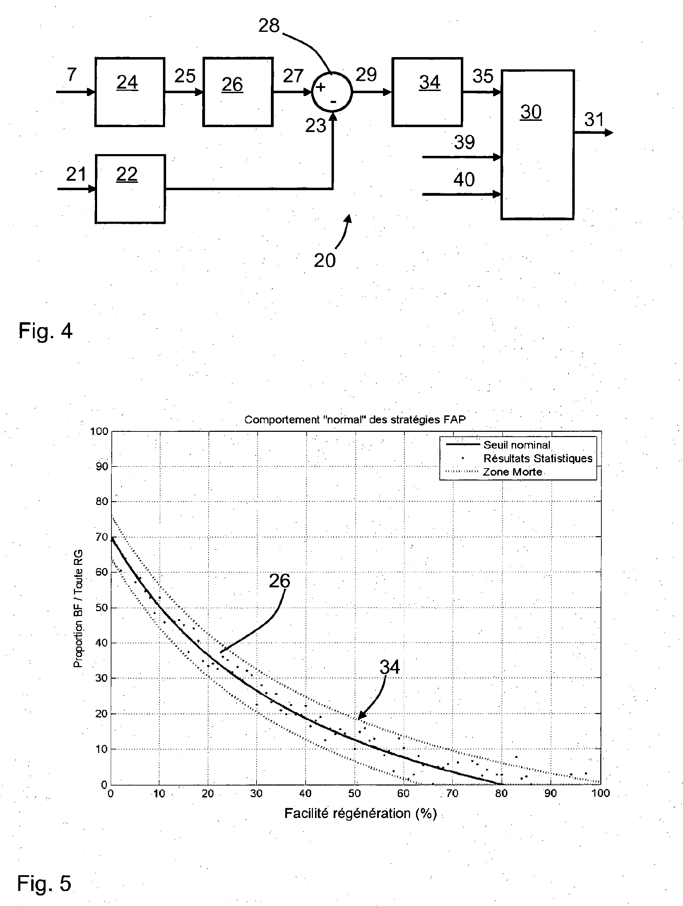

- la figure 4 est une représentation schématique de la détermination du facteur de correction ; et
- la figure 5 est une illustration d'une courbe de calibration statistique donnant la proportion théorique de régénération qui aurait dû être déclenchée par l'estimateur à boucle fermée en fonction de la valeur moyenne du paramètre de facilité.

L'invention concerne notamment un véhicule automobile 1 qui comprend un moteur à combustion 2 (ici, un moteur diesel) duquel débouche une conduite d'évacuation 3 dans laquelle est disposé un filtre à particules 4 destiné à filtrer les particules générées par le moteur 2. Le véhicule comprend également un système de contrôle moteur 5 configuré pour, notamment, gérer le filtre à particules 4 et en particulier déclencher 6 périodiquement des phases de régénération lors desquelles sont brûlées les particules accumulées dans le filtre 4 lors des phases de filtration.

Une phase de régénération est déclenchée par le franchissement d'une valeur seuil de la charge du filtre en particules 4. La valeur seuil déclenchant la régénération est différente selon la valeur d'un paramètre de facilité 7 caractérisant la facilité de réaliser la régénération. Ce paramètre de facilité 7 est déterminé par un descripteur de sévérité de roulage 8 en fonction de la valeur de différentes variables 9 représentant l'état du véhicule 1, par exemple, la vitesse de ce dernier, le régime et la charge du moteur 2, la température du liquide de refroidissement, la température de la ligne d'échappement 3...).

Ainsi, selon la valeur du paramètre de facilité 7, la régénération est déclenchée 6 soit par le franchissement d'un premier seuil par une première valeur de charge en particules 10 qui est déterminée par un estimateur de charge à boucle ouverte 11, soit par le franchissement d'un second seuil par une seconde valeur de charge en particules 12 qui est déterminée par un estimateur de charge à boucle fermée 13.

La première valeur de charge en particules 10 est déterminée à partir d'une estimation de production de particules 14 produites par le moteur 2 qui est une estimation réalisée par un estimateur de production de particules 15 à partir de différentes variables 16 telles que le régime et le couple du moteur 2, la température du liquide de refroidissement, la température de la ligne d'échappement 3, la pression de l'air en admission, la quantité de carburant injecté... La première valeur de charge en particules 10 est également déterminée à partir d'un modèle thermique 17 du filtre à particules 4, ce modèle thermique 17 comprenant un modèle de chargement qui estime l'accumulation des particules dans le filtre 4 pendant les phases de filtration, et un modèle de combustion qui estime la quantité de particules brûlant pendant les phases de régénération.

La seconde valeur de charge en particules 12 est déterminée à partir de la mesure d'une grandeur physique 18 dépendante de la charge du filtre à particules 4, par exemple, la différence de pression existant aux extrémités amont et aval du filtre 4).

Un superviseur de filtre 19 envoie une commande de déclenchement de régénération 6, si, le paramètre de facilité 7 représentant un roulage favorable aux régénérations, le premier seuil est franchi d'après l'estimateur de charge à boucle ouverte 11, ou si, le paramètre de facilité 7 représentant un roulage défavorable, le second seuil est franchi d'après l'estimateur de charge à boucle fermée 13, la valeur du second seuil étant supérieure à celle du premier seuil.

Le superviseur de filtre 19 envoie également, du fait de l'envoi de la commande de déclenchement de régénération 6, deux informations à un détecteur de déviation 20 : d'une part, la commande de déclenchement de régénération 6 qui entraîne l'activation du détecteur de déviation 20, et, d'autre part un signal d'identification 21 qui indique si la régénération a été déclenchée par l'estimateur de charge à boucle ouverte 11 ou par l'estimateur de charge à boucle fermée 13.

Le détecteur de déviation 20 comprend un premier compteur moyenneur 22 qui détermine la proportion 23 des régénérations qui ont été déclenchées par l'estimateur de charge à boucle fermée 13, et un deuxième compteur moyenneur 24 qui détermine la valeur moyenne 25 du paramètre de facilité 7. Une relation statistique 26 détermine la proportion théorique 27 des régénérations qui aurait dû être déclenchées par l'estimateur de charge à boucle fermée 13 compte tenu de la valeur moyenne 25 du paramètre de facilité 7. La relation statistique 26 donnant la proportion théorique 27 de régénération qui aurait dû être déclenchée par l'estimateur à boucle fermée 13 en fonction de la valeur moyenne 25 du paramètre de facilité 7 est déterminée à partir d'une analyse statistique chez un échantillon représentatif de véhicules, en fonction des couples de la valeur de la proportion des régénérations déclenchées par l'estimateur à boucle fermée et de la valeur moyenne du paramètre de facilité.

Un comparateur 28 détermine un écart discriminant 29 entre la proportion 23 des régénérations déclenchées par l'estimateur de charge à boucle fermée 13 et la proportion théorique 27.

Un régulateur 30 détermine, à partir de l'écart discriminant 29, un facteur de correction 31 qui est utilisé pour corriger 32 l'estimation de production de particules 14 réalisée par l'estimateur de production de particules 15. C'est l'estimation corrigée de production de particules 33 qui est utilisée par l'estimateur de charge à boucle ouverte 11. En l'occurrence, l'estimation corrigée de production de particules 33 est égale au produit du facteur de correction 31 et de l'estimation de production de particules 14.

En l'occurrence, le régulateur 30 utilisé est un régulateur proportionnel intégral. Par ailleurs, une zone morte 34 est associée à la relation statistique 26 de sorte que seul un écart discriminant significatif 35 est envoyé au régulateur 30, l'écart discriminant significatif 35 étant soit égal à zéro si la proportion 23 des régénérations déclenchées par l'estimateur de charge à boucle fermée 13 est située dans la zone morte 34 associée à la relations statistique 26, soit égal à l'écart discriminant 29 dans le cas contraire.

Ici, le facteur de correction 31 est égal au produit 36 d'une partie actuelle 37 qui est déterminée par le régulateur 30 à partir de l'écart discriminant 29 déterminé suite au déclenchement de la dernière régénération, et d'une partie historique 38 qui est mémorisée dans le régulateur 30 et qui correspond au facteur de correction 31 qui avait été déterminé suite au déclenchement de l'avant dernière régénération.

Ce procédé de correction de l'estimation de production de particules est déclenché après chaque déclenchement de régénération. Lorsqu'un écart discriminant significatif 35 est déterminé, une correction 31 est appliquée à l'estimation 14. Lorsque, suite à cette première correction 31, aucun nouvel écart discriminant significatif est détecté, le régulateur 30 renvoi une valeur de la partie actuelle 37 du facteur de correction 31 égale à 1 de sorte que le facteur de correction 31 garde sa valeur précédente. Au contraire, lorsque suite à la première correction 31, un second écart significatif est détecté, le régulateur 30 renvoi une valeur de la partie actuelle 37 du facteur de correction 31 différente de 1 de façon à modifier le facteur de correction 31 précédemment calculé.

Par ailleurs, afin d'éviter un emballement dans le cas ou la surémission ou la sous émission de particules est trop importante, la valeur pouvant être prise par le facteur de correction 31 est bornée par une valeur maximale 38 et une valeur minimale 39. De plus, l'atteinte par le facteur de correction 31 de l'une des deux bornes 36, 37 entraîne une action corrective allant au-delà de la simple correction de l'estimation de production de particules, telle qu'une action sur la commande d'au moins un actionneur lié au fonctionnement du moteur (par exemple un actionneur concernant l'admission, l'injection, la recirculation des gaz d'échappement...) ou l'envoi d'un signal d'alerte au conducteur (pour, par exemple, une correction par un professionnel).

## Revendications

1. Procédé de gestion d'un filtre (4) à particules émises par un moteur à combustion (2), une régénération du filtre (4) étant déclenchée (6), selon la valeur d'un paramètre de facilité (7) caractérisant la facilité de réaliser la régénération compte tenu de variables d'état du véhicule, suivant que ce paramètre de facilité (7) correspond à un roulage favorable ou à un roulage défavorable, soit par le franchissement d'un premier seuil de charge par une valeur (10) qui est déterminée par un estimateur de charge à boucle ouverte (11) à partir d'une estimation de production de particules (14) par le moteur (2), soit par le franchissement d'un second seuil de charge par une valeur (12) qui est déterminée par un estimateur de charge à boucle fermée (13) à partir de la mesure d'une grandeur physique dépendante de la charge du filtre (4), **caractérisé en ce que** l'estimation de production de particules (14) est corrigée (32) par un facteur de correction (31) qui est déterminé en fonction d'un écart discriminant (29) entre la proportion (23) des régénérations déclenchées par l'estimateur de charge à boucle fermée (13) et une proportion théorique (27) des régénérations qui aurait dû être déclenchées par l'estimateur de charge à boucle fermée (13) compte tenu de la valeur moyenne (25) du paramètre de facilité (7).

2. Procédé de gestion du filtre selon la revendication 1, **caractérisé en ce qu'**une zone morte (34) est associée à la relation (26) donnant la proportion théorique (27) des régénérations qui aurait dû être déclenchées par l'estimateur à boucle fermée (13) en fonction de la valeur moyenne (25) du paramètre de facilité (7).

3. Procédé de gestion du filtre selon l'une des revendications 1 et 2, **caractérisé en ce que** la valeur pouvant être prise par le facteur de correction (31) est bornée par une valeur maximale (39) et une valeur minimale (40).

4. Procédé de gestion du filtre selon la revendication 3, **caractérisé en ce que** l'atteinte de l'une des deux bornes (39, 40) par le facteur de correction (31) entraîne une action corrective supplémentaire.

5. Procédé de gestion du filtre selon l'une des revendications 1 à 4, **caractérisé en ce que** le facteur de correction (31) est le cumul d'une partie actuelle (37) qui est déterminée par l'écart discriminant (29) déterminée suite au déclenchement de la dernière régénération, et d'une partie historique (38) mémorisée qui correspond à la valeur du facteur de correction déterminé suite au déclenchement de l'avant dernière régénération.

6. Procédé de gestion du filtre selon l'une des revendications 1 à 5, **caractérisé en ce que** la relation (26) donnant la proportion théorique (27) de régénération qui aurait dû être déclenchée par l'estimateur à boucle fermée (13) en fonction de la valeur moyenne (25) du paramètre de facilité (7) est déterminée à partir d'une analyse statistique de couples comprenant la valeur de la proportion des régénérations déclenchées par l'estimateur à boucle fermée et la valeur moyenne associée du paramètre de facilité dans un échantillon représentatif.

7. Procédé de gestion du filtre selon l'une des revendications 1 à 6, **caractérisé en ce que** la valeur corrigée de l'estimation de la production de particules (33) utilisée par l'estimateur de charge à boucle ouverte (11) est égale au produit du facteur de correction (31) et de la valeur de la production de particules (14) estimée par un estimateur de production de particules (15).

8. Procédé de gestion du filtre selon l'une des revendications 1 à 7, **caractérisé en ce que** le facteur de correction (31) est obtenu par l'application d'un régulateur proportionnel intégral (30) à l'écart discriminant (29).

9. Véhicule automobile (1) comprenant un moteur à combustion (2), un filtre à particules (4) et un système de contrôle moteur configuré pour déclencher (6) une régénération du filtre (4), selon la valeur d'un paramètre de facilité (7) caractérisant la facilité de réaliser la régénération compte tenu de variables d'état du véhicule (1), soit par le franchissement d'un premier seuil de charge par une valeur (10) qui est déterminée par un estimateur de charge à boucle ouverte (11) à partir d'une estimation de production de particules (14) par le moteur (2), soit par le franchissement d'un second seuil de charge par une valeur (12) qui est déterminée par un estimateur de charge à boucle fermée (13) à partir de la mesure d'une grandeur physique dépendante de la charge du filtre, **caractérisé en ce que** le système de contrôle moteur est configuré pour corriger (32) l'estimation de production de particules (14) par un facteur de correction (31) qui est déterminé en fonction d'un écart discriminant (29) entre la proportion (23) des régénérations déclenchées par l'estimateur de charge à boucle fermée (13) et une proportion théorique (27) des régénérations qui aurait dû être déclenchées par l'estimateur de charge à boucle fermée (13) compte tenu de la valeur moyenne (25) du paramètre de facilité (7).

## Patentansprüche

1. Verwaltungsverfahren eines Filters (4) für Partikel, die von einem Verbrennungsmotor (2) ausgegeben werden, wobei eine Regeneration des Filters (4) in Abhängigkeit von dem Wert eines Leichtigkeitsparameters (7) ausgelöst wird (6), der die Leichtigkeit der Ausführung der Regeneration unter Berücksichtigung von Zustandsvariablen des Fahrzeugs je nachdem charakterisiert, ob dieser Leichtigkeitsparameter (7) einem günstigen Fahren oder einem ungünstigen Fahren entspricht, oder durch Überschreiten eines ersten Chargenschwellenwerts durch einen Wert (10) der von einem Chargenschätzer mit offener Schleife (11) ausgehend von einer Schätzung der Produktion von Partikeln (14) durch den Motor (2) bestimmt wird, oder durch Überschreiten eines zweiten Chargenschwellenwerts durch einen Wert (12), der von einem Chargenschätzer mit geschlossener Schleife (13) bestimmt wird, ausgehend von der Messung einer physikalischen Größe, die von der Charge des Filters (4) abhängt, **dadurch gekennzeichnet, dass** die Schätzung der Produktion von Partikeln (14) mit einem Korrekturfaktor (31) korrigiert wird (32), der in Abhängigkeit von einem diskriminierenden Unterschied (29) zwischen dem Anteil (23) der Regenerationen, die von dem Chargenschätzer mit geschlossener Schleife (13) ausgeführt werden, und einem theoretischen Anteil (27) der Regenerationen, die der Chargenschätzer mit geschlossener Schleife (13) unter Berücksichtigung des Durchschnittswerts (25) des Leichtigkeitsparameters (7) auslösen hätte müssen, bestimmt wird.

2. Verwaltungsverfahren des Filters nach Anspruch 1, **dadurch gekennzeichnet dass** eine Totzone (34) mit der Beziehung (26) assoziiert ist, die den theoretischen Anteil (27) der Regenerationen ergibt, die der Schätzer in geschlossener Schleife (13) in Abhängigkeit von dem Durchschnittswert (25) des Leichtigkeitsparameters (7) ausführen hätte müssen.

3. Verwaltungsverfahren des Filters nach einem der Ansprüche 1 und 2, **dadurch gekennzeichnet, dass** der Wert, der als der Korrekturfaktor (31) genommen werden kann, durch einen Höchstwert (39) und einen Mindestwert (40) eingegrenzt ist.

4. Verwaltungsverfahren des Filters nach Anspruch 3, **dadurch gekennzeichnet, dass** das Erreichen eines der zwei Grenzwerte (39, 40) durch den Korrekturfaktor (31) eine zusätzliche korrigierende Aktion nach sich zieht.

5. Verwaltungsverfahren des Filters nach einem der Ansprüche 1 bis 4, **dadurch gekennzeichnet, dass** der Korrekturfaktor (31) die Summe eines aktuellen Teils (37) ist, der durch den diskriminierenden Unterschied (29) bestimmt wird, der im Anschluss an das Auslösen der letzten Regeneration bestimmt wird, und einem gespeicherten historischen Teil (38) ist, der dem Wert des Korrekturfaktors entspricht, der im Anschluss an das Auslösen der vorletzten Regeneration bestimmt wird.

6. Verwaltungsverfahren des Filters nach einem der Ansprüche 1 bis 5, **dadurch gekennzeichnet, dass** die Beziehung (26), die den theoretischen Anteil (27) der Regenerationen ergibt, die der Schätzer mit geschlossener Schleife (13) in Abhängigkeit von dem Durchschnittswert (25) des Leichtigkeitsparameters (7) auslösen hätte müssen, ausgehend von einer statistischen Analyse von Paaren bestimmt wird, die den Wert des Anteils der vom Schätzer mit geschlossener Schleife ausgelösten Regenerationen und den Durchschnittswert assoziiert mit dem Leichtigkeitsparameter in einer repräsentativen Stichprobe umfasst.

7. Verwaltungsverfahren des Filters nach einem der Ansprüche 1 bis 6, **dadurch gekennzeichnet, dass** der korrigierte Wert der Schätzung der Produktion von Partikeln (33), der von dem Chargenschätzer mit offener Schleife (11) verwendet wird, gleich dem Produkt aus dem Korrekturfaktors (31) und dem Wert der Produktion von Partikeln (14), der von einem Partikelproduktionsschätzer (15) geschätzt wird, ist.

8. Verwaltungsverfahren des Filters nach einem der Ansprüche 1 bis 7, **dadurch gekennzeichnet, dass** der Korrekturfaktor (31) durch Anwenden eines Proportional-Integralreglers (30) auf den diskriminierenden Unterschied (29) erzielt wird.

9. Kraftfahrzeug (1), das einen Verbrennungsmotor (2), ein Partikelfilter (4) und ein Motorsteuersystem aufweist, das konfiguriert ist, um eine Regeneration des Filters (4) in Abhängigkeit von dem Wert eines Leichtigkeitsparameters (7), der die Leichtigkeit der Ausführung der Regeneration aufgrund von Zustandsvariablen des Fahrzeugs (1) charakterisiert, auszulösen (6), entweder durch das Überschreiten eines ersten Chargenschwellenwerts durch einen Wert (10), der von einem Chargenschätzer mit offener Schleife (11) ausgehend von einer Schätzung der Produktion von Partikeln (14) durch den Motor (2) bestimmt wird, oder durch das Überschreiten eines zweiten Chargenschwellenwerts durch einen Wert (12), der von einem Chargenschätzer mit geschlossener Schleife (13) ausgehend von der Messung einer physikalischen Größe bestimmt wird, die von der Charge des Filters abhängt, **dadurch gekennzeichnet, dass** das Motorsteuersystem konfiguriert ist, um die Schätzung der Produktion von Partikeln (14) mit einem Korrekturfaktor (31) zu korrigieren (32), der in Abhängigkeit von einem diskriminierenden Unterschied (29) zwischen dem Anteil (23) der Regenerationen, die der Chargenschätzer mit geschlossener Schleife (13) ausgelöst hat, und einem theoretischen Anteil (27) der Regenerationen, die der Chargenschätzer mit geschlossener Schleife (13) aufgrund des Durchschnittswerts (25) des Leichtigkeitsparameters (7) auslösen hätte müssen, bestimmt wird.

## Claims

1. A method for managing a filter (4) of particles emitted by an internal combustion engine (2), a regeneration of the filter (4) being triggered (6) according to the value of a facility parameter (7) characterizing the facility of realizing the regeneration taking into account status variables of the vehicle, according to whether this facility parameter (7) corresponds to a favourable run or an unfavourable run, either by exceeding a first load threshold by a value (10) which is determined by an open loop load estimator (11) from an estimation of production of particles (14) by the engine (2), or by exceeding a second load threshold by a value (12) which is determined by a closed loop load estimator (13) from the measurement of a physical quantity dependent on the load of the filter (4), **characterized in that** the estimation of production of particles (14) is corrected (32) by a correction factor (31) which is determined as a function of a discriminating deviation (29) between the proportion (23) of the regenerations triggered by the closed loop load estimator (13) and a theoretical proportion (27) of the regenerations which should have been triggered by the closed loop estimator (13) taking into account the mean value (25) of the facility parameter (7).

2. The method for managing the filter according to Claim 1, **characterized in that** a dead zone (34)is associated to the relationship (26) giving the theoretical proportion (27) of the regenerations which should have been triggered by the closed loop estimator (13) as a function of the mean value (25) of the facility parameter (7).

3. The method for managing the filter according to one of Claims 1 and 2, **characterized in that** the value able to be taken by the correction factor (31) is delimited by a maximum value (39) and a minimum value (40).

4. The method for managing the filter according to Claim 3, **characterized in that** the reaching of one of the two limits (39, 40) by the correction factor (31) brings about a supplementary corrective action.

5. The method for managing the filter according to one of Claims 1 to 4, **characterized in that** the correction factor (31) is the total of a current portion (37), which is determined by the discriminating deviation (29) determined following the triggering of the last regeneration, and of a stored historic portion (38) which corresponds to the value of the correction factor determined following the triggering of the last-but-one regeneration.

6. The method for managing the filter according to one of Claims 1 to 5, **characterized in that** the relation (26) giving the theoretical proportion (27) of regeneration which should have been triggered by the closed loop estimator (13) as function of the mean value (25) of the facility parameter (7) is determined from a statistical analysis of pairs comprising the value of the proportion of the regenerations triggered by the closed loop estimator and the associated mean value of the facility parameter in a representative sample.

7. The method for managing the filter according to one of Claims 1 to 6, **characterized in that** the corrected value of the estimation of the production of particles (33) used by the open loop load estimator (11) is equal to the product of the correction factor (31) and of the value of the production of particles (14) estimated by a particle production estimator (15).

8. The method for managing the filter according to one of Claims 1 to 7, **characterized in that** the correction factor (31) is obtained by the application of an integral proportional regulator (30) to the discriminating deviation (29).

9. A motor vehicle (1) including an internal combustion engine (2), a particle filter (4) and an engine control system configured to trigger (6) a regeneration of the filter (4), according to the value of a facility parameter (7) characterizing the facility of realizing the regeneration taking into account status variables of the vehicle (1), either by the exceeding of a first load threshold by a value (10) which is determined by an open loop load estimator (11) from a production estimation of particles (14) by the engine (2), or by the exceeding of a second load threshold by a value (12) which is determined by a closed loop load estimator (13) from the measurement of a physical quantity dependent on the load of the filter, **characterized in that** the engine control system is configured to correct (32) the estimation of production of particles (14) by a correction factor (31) which is determined as a function of a discriminating deviation (29) between the proportion (23) of the regenerations triggered by the closed loop load estimator (13) and a theoretical proportion (27) of the regenerations which should have been triggered by the closed loop estimator (13) taking into account the mean value (25) of the facility parameter (7).
